# EUROPEAN PATENT SPECIFICATION

(11) **EP 3 322 599 B1**
(45) Date of publication and mention of the grant of the patent: **15.07.2020**
(21) Application number: 16832328.5
(22) Date of filing: 03.08.2016
(51) Int. Cl.: B60C 23/04

(54) **METHODS AND SYSTEMS FOR TIRE MANAGEMENT**
VERFAHREN UND SYSTEME ZUR REIFENVERWALTUNG
PROCÉDÉS ET SYSTÈMES DE GESTION DE PNEU

(30) Priority: 04.08.2015 CN 201510468152; 18.09.2015 CN 201510595807; 20.09.2015 CN 201510597543; 26.10.2015 CN 201520834230 U; 29.07.2016 CN 201620832344 U
(43) Date of publication of application: 23.05.2018
(73) Proprietor: Xue, Ji, Tianjin 300381 (CN)
(72) Inventor: XUE, Ji, Tianjin 300381 (CN); XUE, Duoduo, Tianjin 300381 (CN)
(74) Representative: Wang, Bo
(86) International application number: PCT/CN2016/093105
(87) International publication number: WO 2017/020840

(56) References cited:
- EP-A1- 2 727 751
- WO-A2-2006/098840
- CN-A- 1 704 270
- CN-A- 1 994 765
- CN-A- 102 490 555
- CN-A- 102 963 219
- CN-A- 103 273 811
- CN-A- 104 097 467
- CN-A- 105 015 278
- CN-A- 105 128 606
- US-A- 5 483 827
- US-A1- 2010 109 857
- US-A1- 2015 054 640

## Description

### CROSS-REFERENCE TO RELATED APPLICATIONS

This application claims priority of Chinese Patent Application No. 201510468152.9 filed on August 4, 2015, Chinese Patent Application No. 201510595807.9 filed on September 18, 2015, Chinese Patent Application No. 201510597543.0 filed on September 20, 2015, and Chinese Patent Application No. 201520834230.8 filed on October 26, 2015.

### TECHNICAL FIELD

The present disclosure generally relates to a tire management, and more particularly to a system and method for acquiring, processing, and managing tire information.

### BACKGROUND

Tire management is important to ensure the rapidity and safety of vehicles. During tire management, tire information may be acquired and/or processed. During acquiring or processing the tire information, some errors may occur. Therefore, there may be a need to provide systems and methods for tire management to reduce or prevent errors and to acquire and/or process tire information efficiently.

The document US 2015/054640 A1 discloses a tire pressure monitoring system comprising a hand held as activator. WO 2006/098840 discloses tires comprising transponders on the outer surface of the tire. EP 2 727 751 discloses a tire management system based on a tire pressure monitoring system.

### SUMMARY

In a first aspect of the present disclosure, a method for tire management is provided. The method may include one or more of the following operations. An activation signal may be generated by an activator. The activation signal may be transmitted to a sensor by the activator. The activation signal may be received from the activator by the sensor. Tire information relating to a tire on which the sensor is installed may be generated, if the sensor receives the activation signal. The tire information may be transmitted to a computing device by the sensor. The tire information from may be received by the sensor. An event may be generated based on the tire information by the computing device.

In some embodiments, the tire information may include at least one of tire brand, tire type, tire model, tire position, tire pressure, tire temperature, tread information, tire code, production date of the tire, distance that the tire has travelled, vehicle type, license plate number, or information relating to the sensor.

In some embodiments, the information relating to the sensor may be determined by the following operations. Activation information may be determined. The activation information may be transmitted to the computing device. The activation information may be received by the computing device. The information relating to the sensor may be generated based on the activation information by the computing device.

In some embodiments, the sensor may include at least one of a radio frequency identification (RFID), a tire pressure sensor, or a tread sensor.

In some embodiments, the activation information may include at least one of an activator code, a strength of the activation signal, or a tire position of the activator.

In some embodiments, the information relating to the sensor may include a tire position of the sensor.

In some embodiments, the event may include a report indicating at least one of the tire pressure, the tire temperature, or the tread information.

In some embodiments, the sensor may be located in the crown of a tire.

In some embodiments, the activator may be located over a center of the tire.

In some embodiments, the activator may activate the sensor in the tire without activating a sensor in another tire.

In some embodiments, the activator may activate sensors in different tires based on the strength of the activation signal.

In some embodiments, the tire pressure may include one or more antennas configured to receive or transmit signals, a circuit board configured to control the tire pressure sensor, a sensor body configured to hold the one or more antennas and the circuit board, and a body hole on the sensor body, the one or more antennas extending from an interior of the sensor body to an exterior of the sensor body through the body hole.

In some embodiments, a shape of the antenna may be straight, spiral, polygonal, or circular.

In some embodiments, there may be a gap between the body hole and the antenna.

In some embodiments, the sensor may be fixed to the tire by using a fixing device. The fixing device may include a chamber with an opening. The sensor may be put into or taken out of the fixing device via the opening.

In some embodiments, the fixing device may be made of rubber.

In some embodiments, a shape of the fixing device may be a cylinder. The external diameter of the cylinder may be in a range of 10-100 millimeters, the height of the cylinder may be in a range of 3-20 millimeters, the wall thickness of the cylinder may be in a range of 1-5 millimeters, the diameter of the opening being in a range of 5-80 millimeters.

In some embodiments, the tread sensor may include one or more closed circuits located in a tire tread and arranged along a wear direction of the tire tread.

In a second aspect of the present disclosure, a computing device for tire management is provided. The computing device may be configured to perform the following operations: receiving tire information from a sensor, the tire information being generated by the sensor when the sensor receives an activation signal from an activator; and generating an event based on the tire information.

In some embodiments, the computing device may be further configured to perform the following operations: receiving activation information from the activator; and determining information relating to the sensor based on the activation information.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities and combinations set forth in the detailed examples discussed below.

### BRIEF DESCRIPTION OF THE DRAWINGS

FIG. 1 is a block diagram illustrating an exemplary tire management system according to some embodiments of the present disclosure;
FIG. 2 is a block diagram illustrating an architecture of an exemplary measurement device according to some embodiments of the present disclosure;
FIG. 3-A is a schematic diagram illustrating hardware and software components of an exemplary computing device according to some embodiments of the present disclosure;
FIG. 3-B is a block diagram illustrating an architecture of an exemplary computing device according to some embodiments of the present disclosure;
FIG. 4 is a schematic diagram illustrating exemplary locations of a sensor in a tire according to some embodiments of the present disclosure;
FIG. 5-A is a sectional view of an exemplary tire pressure sensor when there may be a gap between an antenna and a body hole according to some embodiments of the present disclosure;
FIG. 5-B is a top view of the exemplary tire pressure sensor according to some embodiments of the present disclosure;
FIG. 5-C is a sectional view of an exemplary tire pressure sensor when there may be no gap between an antenna and a body hole according to some embodiments of the present disclosure;
FIG. 6-A is a flowchart illustrating an exemplary process for tire management according to some embodiments of the present disclosure;
FIG. 6-B is a flowchart illustrating an exemplary process for tire management according to some embodiments of the present disclosure;
FIG. 7 is a schematic diagram illustrating an exemplary activator according to some embodiments of the present disclosure;
FIG. 8-A is a schematic diagram illustrating an exemplary tread sensor according to some embodiments of the present disclosure;
FIG. 8-B is a schematic diagram illustrating an exemplary location of a tread sensor in a tire according to some embodiments of the present disclosure;
FIG. 9 is a schematic diagram illustrating structure of an exemplary tread sensor according to some embodiments of the present disclosure;
FIG. 10-A is a top view of an exemplary fixing device according to some embodiments of the present disclosure; and
FIG. 10-B is a sectional view of the exemplary fixing device according to some embodiments of the present disclosure.

### DETAILED DESCRIPTION

In the following detailed description, numerous specific details are set forth by way of examples in order to provide a thorough understanding of the relevant disclosure. However, it should be apparent to those skilled in the art that the present disclosure may be practiced without such details. In other instances, well known methods, procedures, module, systems, devices, and/or drivers have been described at a relatively high-level, without detail, in order to avoid unnecessarily obscuring aspects of the present disclosure.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprise," "comprises," and/or "comprising," "include," "includes," and/or "including," when used in this specification, specify the presence of stated features, integers, steps, operations, elements, and/or components, but do not preclude the presence or addition of one or more other features, integers, steps, operations, elements, components, and/or groups thereof.

These and other features, and characteristics of the present disclosure, as well as the methods of operation and functions of the related elements of structure and the combination of parts and economies of manufacture, may become more apparent upon consideration of the following description with reference to the accompanying drawing(s), all of which form a part of this specification. It is to be expressly understood, however, that the drawing(s) are for the purpose of illustration and description only and are not intended to limit the scope of the present disclosure. It is understood that the drawings are not to scale.

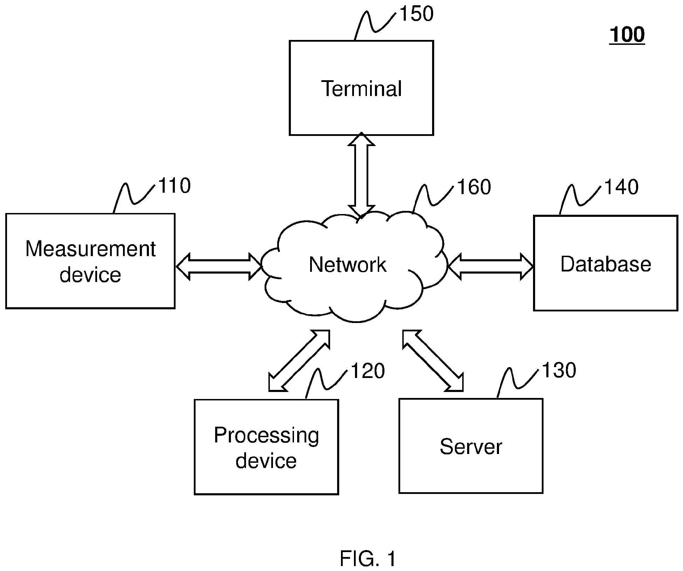

FIG. 1 is a block diagram of an exemplary tire management system 100 according to some embodiments of the present disclosure. Tire management system 100 may be configured to manage tire information. Tire management system 100 may include a measurement device 110, a processing device 120, a server 130, a database 140, a terminal 150, and a network 160. Various components of tire management system 100 may be connected to each other directly or indirectly via network 160.

Measurement device 110 may acquire and/or detect tire information from a tire through one or more sensors attached to or embedded in the tire. The tire information (also referred to as the "tire information relating to the tire") may include information relating to the tire, information relating to the vehicle on which the tire is installed (or was installed), measurement parameter, or the like, or a combination thereof. The information relating to the tire may include the tire brand, tire type, tire model, tire position information, tire pressure, tire temperature, tread information, tire code, production date of the tire, distance that the tire has travelled, or the like, or any combination thereof. As used herein, the tire position information may refer to a wheel of the vehicle where the tire is located. For example, the vehicle may include 4 wheels (wheel 1, wheel 2, wheel 3, and wheel 4), and for the tire located on wheel 1, the tire position is wheel 1. As used herein, the tread information may refer to the tread pattern, tread pattern depth, tread pattern width, wear and tear of the tread pattern, or the like, or a combination thereof. The information relating to the vehicle may include the vehicle type, vehicle model, vehicle identification number, license plate number, owner of the vehicle, or the like, or a combination thereof. The measurement parameter may include activation information (e.g., an activation signal, tire position of an activator, activator code, strength of the activation signal, or the like), sensor information (also referred to as "information relating to the sensor") (e.g., sensor code, tire position of a sensor, or the like). As used herein, the tire position of the activator may refer to a position on, over, or nearby the tire where the activator is located. The tire position of the sensor may refer to a position on or in the tire where the sensor is located. The acquired or detected tire information may be transmitted to processing device 120, server 130, database 140, and/or terminal 150 via network 160.

Processing device 120 may be configured to receive and process the tire information. Processing device 120 may generate one or more events based on the tire information. The event may include a report or a result including at least a portion of the tire information, an alert when the tire information (e.g., the tire pressure, the tire temperature, or the tread information) meets certain criteria. In some embodiments, processing device 120 may control or monitor the measurement of some of the tire information. For example, processing device 120 may determine at least some of the measurement parameter (e.g., tire position of a sensor). The generated event(s) and/or the determined measurement parameter(s) may be transmitted to server 130, database 140, and/or terminal 150 via network 160.

Server 130 may be configured to process the tire information or the event(s). In some embodiments, server 130 may be local or remote to processing device 120 (or measurement device 110). In some embodiments, server 130 may be centralized (e.g., a data center) or distributed. In some embodiments, server 130 may include a library (not shown). The library may store tire information corresponding to different tires. The library may include a plurality of sections classified according to time (e.g., this week, last week, or next week, or the like). In some embodiments, server 130 may include a server or a group of servers. In some embodiments, server 130 may be a file server, a database server, an FTP (File Transport Protocol) server, an application server, a proxy server, a mail server, a cloud server, or the like, or any combination thereof.

Database 140 may be configured to store any information acquired and/or generated by measurement device 110, processing device 120, server 130, and/or terminal 150. In some embodiments, processing device 120, server 130, and/or terminal 150 may access database 140 via network 160 to obtain tire information (e.g., the information relating to the tire, the information relating to the vehicle, the measurement parameters, or the like), the event(s), or the like, or a combination thereof. In some embodiments, database 140 may include a volatile or non-volatile storage, a magnetic storage, a semiconductor storage, an optical storage, a removable or non-removable storage, or a tangible (i.e., non-transitory) computer-readable medium including a Read Only Memory (ROM), a flash memory, or a Random Access memory (ROM), or the like, or a combination thereof.

Terminal 150 may be configured to process, store, and/or display at least some of the acquired tire information and/or the generated event(s). In some embodiments, terminal 150 may control access to other components of tire management system 100 (e.g., access to database 140). In some embodiments, terminal 150 may be configured to receive input (e.g., input for controlling measurement device 110) from a user and display various information to the user (e.g., the tire information or an event relating the tire information). In some embodiments, terminal 150 may include a smart phone, a tablet, a personal computer, a wearable device (e.g., a smart glass, a smart watch, or the like), a vehicle terminal, or the like, or any combination thereof.

Network 160 may be a single network or a combination of different networks. Network 160 may include a wireless network (e.g., WiFi, Bluetooth, near field communication, or the like, or a combination thereof), or a wired network. For example, network 160 may be a local area network (LAN), a wide area network (WAN), a public network, a private network, a proprietary network, a Public Telephone Switched Network (PSTN), the Internet, a wireless network, a virtual network, or any combination thereof. Network 160 may also include various network access points, for example, wired or wireless access points such as base stations or Internet exchange points (not shown), through which a data source or any component of tire management system 100 described above may connect to network 160 in order to transmit information via network 160.

FIG. 1 is a specific example of tire management system 100, and the configuration of tire management system 100 is not limited to that illustrated in FIG. 1. For example, server 130 may be omitted, and all of the functions thereof disclosed in this disclosure may be performed by processing device 120, terminal 150, or a combination thereof. As another example, server 130 and terminal 150 may be omitted, and the functions thereof disclosed in this disclosure may be performed by measurement device 110, processing 120, or a combination of both. As a further example, server 130, database 140, and terminal 150 may be omitted, and the functions thereof disclosed in this disclosure may be performed by processing device 120. As a still further example, processing 120 may be omitted, and the functions thereof disclosed in this disclosure may be performed by measurement device 110. Tire management system 100 may include various devices or combinations of devices in different embodiments.

It should be noted that the above description of tire management system 100 is merely provided for the purposes of illustration, and not intended to limit the scope of the present disclosure. For persons having ordinary skills in the art, multiple variations or modifications may be made under the teachings of the present disclosure. However, those variations and modifications do not depart from the scope of the present disclosure. For example, in some embodiments, tire management system 100 may include one or more storage devices (e.g., a disk, a cloud storage, or the like) integrated in any component (e.g., measurement device 110, processing device 120, or the like).

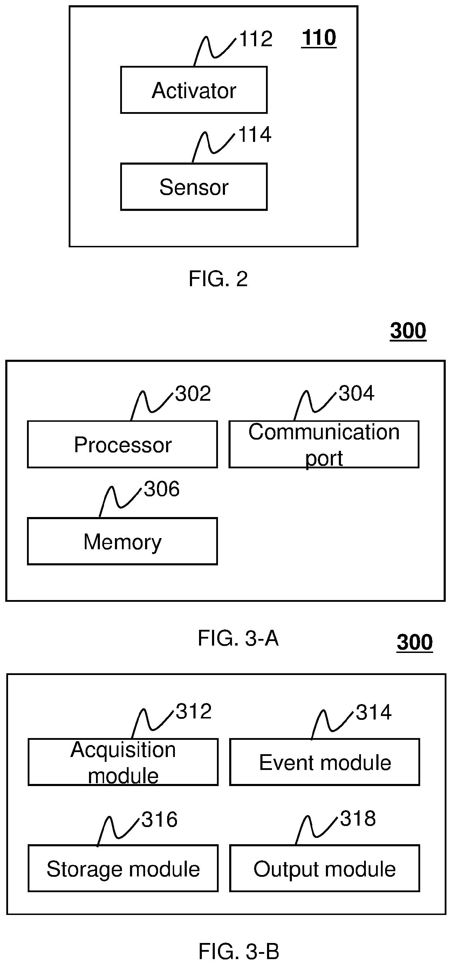

FIG. 2 is a block diagram illustrating an exemplary architecture of measurement device 110 according to some embodiments of the present disclosure. As illustrated, measurement device 110 may include one or more activators 112 and one or more sensors 114. In some embodiments, measurement device 110 may correspond to a tire. Alternatively, a plurality of tires may share a measurement device 110. In some embodiments, an activator 112 may correspond to a sensor 114. Alternatively, a plurality of sensors 114 may share an activator 112. In some embodiments, a plurality of activators 112 may share a sensor 114.

In some embodiments, activator 112 may be configured to generate and transmit an activation signal to sensor 114. As used herein, the activation signal may be used to activate sensor 114 to generate tire information relating to the tire. In some embodiments, terminal 150 may be configured to control activator 112 to generate an activation signal. Alternatively or additionally, activator 112 may generate activation signals continuously or one activation signal every period of time (e.g., one activation signal per minute). Alternatively or additionally, activator 112 may detect sensor 114 and generate an activation signal if sensor 114 is detected.

In some embodiments, activator 112 may generate activation information. In some embodiments, the activation information may be determined by computing device 300 from activator 112. The activation information may include the activation signal, activator code, tire position of activator 112, strength of the activation signal, or the like, or any combination thereof. As used herein, the activator code, the tire position of activator 112, or the strength of the activator signal may be used to determine sensor information of sensor 114 (e.g., tire position of sensor 114).

In some embodiments, activator 112 may be a low-frequency activator. In some embodiments, the activation signal may be an electromagnetic wave. The electromagnetic wave may include a radio wave, a microwave, an infrared ray, visible light, ultraviolet light, an X-ray, a Gamma ray, or the like, or a combination thereof. In some embodiments, the frequency of the activation signal may be 125 KHz, 13.56 MHz, 915 MHz, 2.45 GHz, 5.8 GHz, or the like. In some embodiments, activator 112 may be a handheld activator or a fixed activator. In some embodiments, activator 112 may be located over a tire. For example, activator 112 may be located on a position of the housing of the vehicle that is over the tire.

Sensor 114 may be configured to receive the activation signal from activator 112 and activate itself upon receiving the activation signal. Sensor 114 may also generate tire information based on the activation signal. The tire information may include information relating to the tire (e.g., the tire brand, tire type, tire model, tire position, tire pressure, tire temperature, tread information, tire code, production date of a tire, distance that the tire has travelled, or the like), information relating to vehicle (e.g., vehicle type, vehicle model, vehicle identification number, license plate number, owner of the vehicle, or the like), measurement parameter (e.g., sensor information including sensor code, tire position of a sensor, or the like, or a combination thereof), or the like, or a combination thereof. In some embodiments, sensor 114 may generate and transmit certain tire information, and processing device 120, server 130, and/or terminal 150 may generate (or determine) certain tire information. For example, sensor 114 may detect the tire pressure of the tire and transmit the tire pressure to any other component of tire management system 100. As another example, processing device 120, server 130, or terminal 150 may determine tire position of sensor 114 based on activation information including activator code, tire position of activator 112, or strength of the activation signal.

In some embodiments, sensor 114 may include a radio frequency identification (RFID), a tire pressure sensor, a tread sensor, or the like, or any combination thereof. The radio frequency identification may be configured to store, for example, the information relating to the tire. The tire pressure sensor may be configured to detect, for example, the tire pressure and/or tire temperature. The tread sensor may be configured to detect, for example, tread information (e.g., tread pattern, tread pattern depth, tread pattern width, wear and tear of the tread pattern, or the like). In some embodiments, sensor 114 may be located in the crown of the tire.

It should be noted that the above description is merely provided for the purposes of illustration, and not intended to limit the scope of the present disclosure. For persons having ordinary skills in the art, multiple variations or modifications may be made under the teachings of the present disclosure. However, those variations and modifications do not depart from the scope of the present disclosure. For example, any two of the radio frequency identification, the tire pressure sensor and the tread sensor may be integrated in an independent sensor configured to perform functions thereof.

FIG. 3-A is a schematic diagram illustrating exemplary hardware and software components of a computing device 300 on which measurement device 110, processing device 120, server 130, or terminal 150 may be implemented. Merely by way of example, processing device 120 may be implemented on computing device 300 and configured to perform functions of processing device 120 disclosed in this disclosure.

As illustrated in FIG. 3-A, computing device 300 may include a processor 302, a communication port 304, and a memory 306. Processor 302 may execute computer instructions (e.g., program code) and perform functions in accordance with techniques described herein. Computer instructions may include routines, programs, objects, components, data structures, procedures, modules, and functions, which perform particular functions described herein. Processor 302 may include a microcontroller, a microprocessor, a reduced instruction set computer (RISC), an application specific integrated circuits (ASICs), an application-specific instruction-set processor (ASIP), a central processing unit (CPU), a graphics processing unit (GPU), a physics processing unit (PPU), a microcontroller unit, a digital signal processor (DSP), a field programmable gate array (FPGA), an advanced RISC machine (ARM), a programmable logic device (PLD), or any circuit or processor capable of executing one or more functions, or the like, or any combinations thereof.

Communication port 304 may be configured to transmit to and receive information or data from measurement device 110, processing device 120, server 130, database 140, or terminal 150 via network 160. In some embodiments, communication port 304 may be a wired port (e.g., a Universal Serial Bus (USB) port, a High Definition Multimedia Interface (HDMI) port, or the like) or a wireless port (a Bluetooth port, an infrared interface, a WiFi port, or the like).

Memory 306 may be configured to store one or more computer programs to be executed by processor 302 to perform exemplary methods described in this disclosure. For example, memory 306 may be configured to store program(s) and/or instruction(s) executed by processor 302 to analyze tire information, and/or generate an event (e.g., an alert). In some embodiments, memory 306 may include a mass storage, a removable storage, a volatile read-and-write memory, a read-only memory (ROM), or the like, or any combination thereof. Exemplary mass storage may include a magnetic disk, an optical disk, a solid-state drives, etc. Exemplary removable storage may include a flash drive, a floppy disk, an optical disk, a memory card, a zip disk, a magnetic tape, etc. Exemplary volatile read-and-write memory may include a random access memory (RAM). Exemplary RAM may include a dynamic RAM (DRAM), a double date rate synchronous dynamic RAM (DDR SDRAM), a static RAM (SRAM), a thyristor RAM (T-RAM), and a zero-capacitor RAM (Z-RAM), etc. Exemplary ROM may include a mask ROM (MROM), a programmable ROM (PROM), an erasable programmable ROM (PEROM), an electrically erasable programmable ROM (EEPROM), a compact disk ROM (CD-ROM), and a digital versatile disk ROM, etc.

FIG. 3-B is a block diagram illustrating an exemplary architecture of computing device 300 according to some embodiments of the present disclosure. As illustrated in FIG. 3-B, computing device 300 may include an acquisition module 312, an event module 314, a storage module 316, and an output module 318.

Generally, the word "module" as used herein, refers to logic embodied in hardware or firmware, or to a collection of software instructions. The modules described herein may be implemented as software and/or hardware modules and may be stored in any type of non-transitory computer-readable medium or other storage device. In some embodiments, a software module may be compiled and linked into an executable program. It will be appreciated that software modules can be callable from other modules or from themselves, and/or can be invoked in response to detected events or interrupts. Software modules configured for execution on computing devices (e.g., processor 302) can be provided on a computer readable medium, such as a compact disc, a digital video disc, a flash drive, a magnetic disc, or any other tangible medium, or as a digital download (and can be originally stored in a compressed or installable format that requires installation, decompression, or decryption prior to execution). Such software code can be stored, partially or fully, on a memory device of the executing computing device, for execution by the computing device. Software instructions can be embedded in a firmware, such as an EPROM. It will be further appreciated that hardware modules can be comprised of connected logic units, such as gates and flip-flops, and/or can be comprised of programmable units, such as programmable gate arrays or processors. The modules functionality described herein are preferably implemented as software modules, but can be represented in hardware or firmware. In general, the modules described herein refer to logical modules that can be combined with other modules or divided into sub-modules despite their physical organization or storage.

Acquisition module 312 may be configured to acquire data and/or information from measurement device 110, processing device 120, server 130, database 140, and/or terminal 150. For example, acquisition module 312 may acquire the information relating to the tire, the information relating to the vehicle, the measurement parameter including, for example, the sensor information and the activator information from the measurement device 110. In some embodiments, acquisition module 312 may generate or determine some of the tire information based on the acquired data or information. For example, the sensor information (e.g., tire position of a sensor) may be determined based on the activation information.

Event module 314 may be configured to process or analyzed the acquired data and/or information, and generate an event. The event may include a report or a result including at least a portion of the tire information (e.g., the information relating to tire, the information relating to vehicle, the measurement parameter(s) including the activator information and the sensor information, or the like), an alert when the tire information (e.g., the tire pressure, the tire temperature, or the tread information) meet certain criteria, or the like, or a combination thereof. For example, if event module 314 determines that the tire pressure exceeds a threshold, event module 314 may generate an event indicative of the over-pressure of the tire. In some embodiments, event module 314 may provide statistical analysis data relating to tire information within a specific time interval (e.g., within a month).

Storage module 316 may be configured to store data or information acquired by acquisition module 312, events generated by event module 314, or the like. In some embodiments, storage module 316 may be integrated in any module in computing device 300. In some embodiments, storage module 316 may be optional, and computing device 300 may share a storage with other components of tire management system 100. Storage module 316 may include a storage media disclosed elsewhere in the present disclosure.

Output module 318 may be configured to transmit the tire information and the events to other components of tire management system 100 (e.g., processing device 120, server 130, database 140, terminal 150, or an external device). Output module 318 may be implemented via communication port 304. For example, output module 318 may transmit the events to server 130 to be further analyzed, or transmit the events to terminal 150 to be further accessed by a user.

It should be noted that the above description of the computing device 300 is merely provided for the purposes of illustration, and not intended to limit the scope of the present disclosure. For persons having ordinary skills in the art, multiple variations or modifications may be made under the teachings of the present disclosure. However, those variations and modifications do not depart from the scope of the present disclosure. For example, in some embodiments, acquisition module 312, event module 314, and output module 318 may include a storage unit respectively. As another example, any two of the modules may be integrated in an independent module.

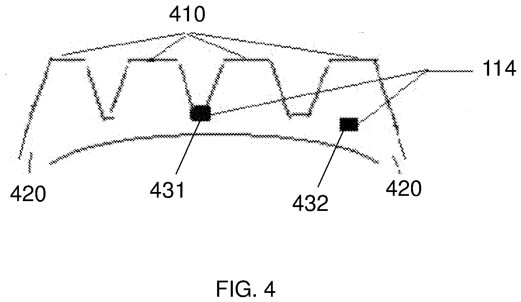

FIG. 4 is a schematic diagram illustrating exemplary locations of a sensor on (or in) a tire according to some embodiments of the present disclosure. As illustrated, a tire may include tire thread 410 and tire shoulder 420. In some embodiments, sensor 114 may be located in the crown of the tire. Alternatively or additionally, sensor 114 may be located at the bottom of the trench of tire tread 410 (illustrated as 431), or into the rubber (illustrated as 432). In some embodiments, sensor 114 may be located in the sidewall of the tire. In some embodiments, the method of attaching sensor 114 to the tire may include pasting, embedding, vulcanization, or the like, or any combination thereof. Through this arrangement, the tire information may be acquired. For example, sensor 114 may be a radio frequency identification (RFID). After receiving an activation signal from activator 112, sensor 114 may transmit tire information including, for example, tire brand, tire type, tire model, production date, or the like to processing device 120.

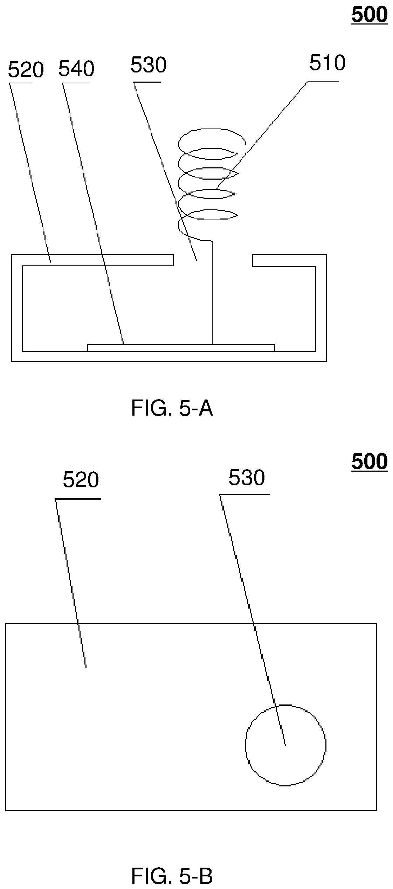

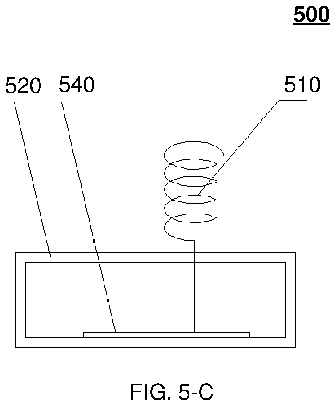

FIG. 5-A is a sectional view of an exemplary tire pressure sensor when there may be a gap between an antenna and a body hole according to some embodiments of the present disclosure. FIG. 5-B is a top view of the tire pressure sensor when there may be a gap between an antenna and a body hole according to some embodiments of the present disclosure. FIG. 5-C is a sectional view of an exemplary tire pressure sensor when there may not be a gap between an antenna and a body hole according to some embodiments of the present disclosure. As illustrated, tire pressure sensor 500 (i.e., sensor 114 or part thereof) may include one or more antennas 510, a sensor body 520, a body hole 530, and a circuit board 540. One or more antennas 510 may be configured to receive or transmit signals (e.g., an activation signal, information relating to the tire, sensor information, or the like). Sensor body 520 may be configured to hold one or more antennas 510 and circuit board 540. Circuit board 540 may be configured to control tire pressure sensor 500. For example, circuit board 540 may control tire pressure sensor 500 to detect tire pressure or tire temperature, or receive or transmit signals. In some embodiments, body hole 530 may be on sensor body 520. In some embodiments, one or more antennas 510 may extend from the interior of sensor body 520 to the exterior of sensor body 520 through body hole 530. In some embodiments, one or more antennas 510 may be connected to circuit board 540.

In some embodiments, there may be a gap between one or more antennas 510 and body hole 530. Circuit board 540 may be water-resistant. In some embodiments, as illustrated in FIG. 5-C, the gap between one or more antennas 510 and body hole 530 may be optional. In some embodiments, antennas 510 may have various shapes. For example, antennas 510 may be straight, spiral, polygonal, circular, or the like. These types of configurations of antennas 510 may improve signal transmission effect and reduce the volume of sensor 114.

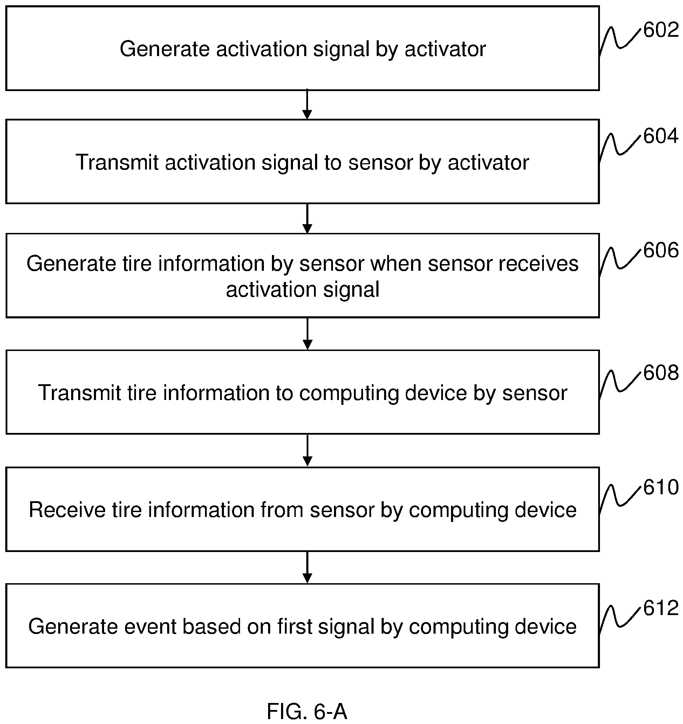

FIG. 6-A is a flowchart illustrating an exemplary process for tire management according to some embodiments of the present disclosure. In 602, an activation signal may be generated by activator 112. In some embodiments, the activation signal may be an electromagnetic wave. The electromagnetic wave may include a radio wave, a microwave, an infrared ray, visible light, ultraviolet light, an X-ray, a Gamma ray, or the like, or a combination thereof. In some embodiments, the frequency of the activation signal may be 125 KHz, 13.56 MHz, 915 MHz, 2.45 GHz, 5.8 GHz, or the like.

In 604, the activation signal may be transmitted to sensor 114 by activator 112. In some embodiments, activator 112 may include an antenna (details may be found in FIG. 5-A and FIG. 5-B and the description thereof) by which the activation signal may be transmitted.

In 606, tire information may be generated by sensor 114 when sensor 114 receives the activation signal. In some embodiments, the tire information may include information relating to the tire, information relating to the vehicle sensor information, sensor information, or the like, or a combination thereof. Exemplary information relating to the tire may include tire brand, tire type, tire model, tire position, tire pressure, tire temperature, tread information, tire code, production date of the tire, distance that the tire has travelled, etc. Exemplary information relating to the vehicle on which the tire is installed (or was installed) may include vehicle type, vehicle identification number, license plate number, or the like, or a combination thereof. Exemplary sensor information may include sensor code, tire position of the sensor, or the like, or a combination thereof. In some embodiments, sensor 114 may include an antenna by which the activation signal may be received.

In 608, the tire information may be transmitted to computing device 300 (i.e., processing device 120, server 130, and/or terminal 150) by sensor 114. In some embodiments, the tire information may be transmitted through antenna 510. In some embodiments, certain tire information may be stored in sensor 114 in advance including, for example, the tire brand, tire type, tire model, tire position, tire code, production date of the tire, license plate number, or sensor code. When sensor 114 is activated, the previously stored tire information may be accessed and transmitted to computing device 300 by sensor 114.

In 610, the tire information may be received from sensor 114 by computing device 300. The tire information may be received via communication port 304. In 612, an event may be generated based on the tire information by computing device 300. In some embodiments, the event may include a report or a result including at least a portion of the tire information. In some embodiments, an event including an alert may be generated if a parameter included in the tire information (e.g., the tire pressure, the tire temperature, or the tread information) exceeds a threshold. For example, the tread information may include wear and tear of the tire, computing device 300 may analyze the wear and tear of the tire and may determine whether the wear and tear of the tire exceed a normal range. If so, computing device 300 may generate an alert and the alert may be transmitted to other component(s) of tire management system 100 (e.g., processing device 120, server 130, and/or terminal 150). As another example, computing device 300 may determine whether the tire pressure acquired from sensor 112 exceeds a threshold pressure. If so, an alert may be generated and transmitted to other component(s) of tire management system 100 (e.g., processing device 120, server 130, and/or terminal 150).

For purpose of illustration, exemplary processes of generating an event are described below. However, it should be noted that the exemplary processes are provided for the purposes of illustration, and not intended to limit the scope of the present disclosure.

For example, sensor 112 may include an RFID, and at least one of the tire brand, tire type, tire model, tire position, tire pressure (the last time read), tire temperature (the last time read), tread information, tire code, production date of the tire, distance that the tire has travelled (the last time read), and license plate number may be stored in the RFID in advance. When the RFID is activated by activator 112, the RFID may access the tire information and transmit the tire information to computing device 300. Computing device 300 may process the tire information and generate a report or a result including at least one of the tire information. Computing device 300 may further transmit the generated report or the result indicative an event to other component(s) of tire management system 100 (e.g., processing device 120, server 130, and/or terminal 150).

As another example, sensor 114 may include a tire pressure sensor. When the tire pressure sensor is activated, the pressure sensor may measure the tire pressure and/or the tire temperature in real time. The tire pressure sensor may generate the tire information including the tire pressure, the tire temperature, the tire code, the tire position, or the like, or a combination thereof. The tire information may be transmitted to computing device 300 for further processing. Computing device 300 may process the tire information and generate a report or a result including at least one of the tire information. Computing device 300 may further process the tire information to determine whether the tire pressure or the tire temperature exceeds a threshold. If so, an alert may be provided. Computing device 300 may further transmit the generated alert indicative the event to other component(s) of tire management system 100 (e.g., processing device 120, server 130, and/or terminal 150).

As a further example, sensor 114 may include a tread sensor. When the tread sensor is activated, the tread sensor may measure the wear and tear of the tire in real time. The tread sensor may generate the tire information including tread information (e.g., tread pattern, wear and tear of the tire, or the like), tire code, tire position, or the like, or a combination thereof. The tire information may be transmitted to computing device 300 for further processing. Computing device 300 may process the tire information and generate a report or a result including at least one of the tire information. Computing device 300 may further process the tire information and determine whether the tread information exceeds a threshold. For example, computing device 300 may determine whether the wear and tear of the tire exceeds a wear threshold. If so, an alert may be provided. Computing device 300 may further transmit the generated alert indicative the event to other component(s) of tire management system 100 (e.g., processing device 120, server 130, and/or terminal 150).

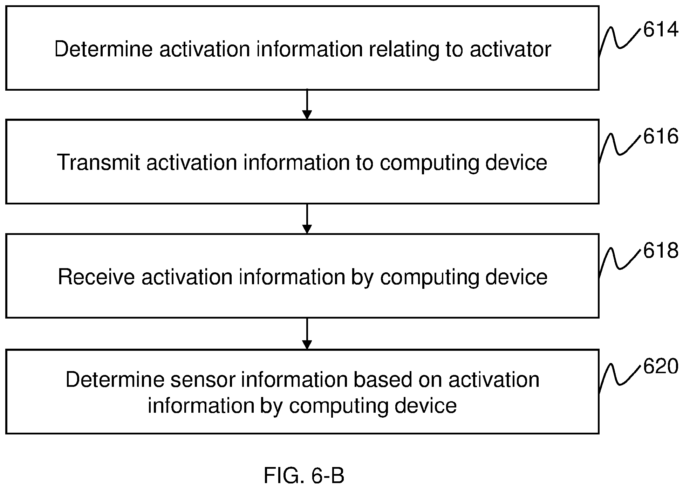

FIG. 6-B is a flowchart illustrating an exemplary process for determining sensor information according to some embodiments of the present disclosure. In 614, activation information relating to activator may be determined. The activation information may include an activator code, a strength of an activation signal, tire position of the activator, or the like, or a combination thereof. In some embodiments, the activation information may be determined by activator 112 or by computing device 300.

In 616, the activation information may be transmitted to computing device 300 by activator 112. In some embodiments, the activation information may be transmitted through one or more antennas in activator 112. In some embodiments, the activator code and the tire position of the activator may be stored in activator 112 in advance. The information stored in activator 112 may be transmitted to computing device 300.

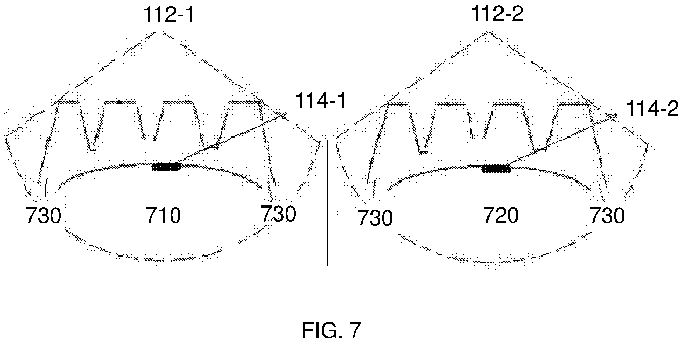

In 618, the activation information may be received by computing device 300. The activation information may be received via communication port 304. In 620, sensor information may be determined based on the activation information by computing device 300. In some embodiments, the sensor information may include tire position of the sensor. For example, the activator code, the tire position of the activator, the strength of the activation signal, and the sensor code may be processed or analyzed, and the tire position of the sensor may be determined. In some embodiments, activator 114 may activate through one or more activation signals a sensor 114 on a tire (but not other sensors on other tires of the vehicle). The tire position of sensor 114 may be determined based on activation information of the activator. In some embodiments, if the activation signal of the activator covers more than one sensor, strengths of the received activation signals by the sensors may differ. The sensor that receives the activation signal having the highest strength may be selected, and the corresponding tire position of the sensor may be determined. More details may be provided below in connection with FIG. 7. In some embodiments, the determined sensor information may be transmitted to processing device 120, server 130, database 140, or terminal 150 for further processing.

FIG. 7 is a schematic diagram illustrating an exemplary activator according to some embodiments of the present disclosure. As illustrated, 710 and 720 refer to a tire A and a tire B, respectively. 112-1 and 112-2 refer to an activator A over tire A 710 and an activator B over tire B 720, respectively. 114-1 and 114-2 refer to a sensor A in tire A 710 and a sensor B in tire B 720, respectively. 730 refers to tire shoulder.

As disclosed elsewhere in the present disclosure, activator 112 may be configured to activate sensor 114 by transmitting an activation signal to sensor 114, which may generate a signal (e.g., the tire information) according to the received activation signal. In some embodiments, the activation signal may be an electromagnetic wave. The electromagnetic wave may include a radio wave, a microwave, an infrared ray, visible light, ultraviolet light, an X-ray, a Gamma ray, or the like, or a combination thereof. In some embodiments, the frequency of the activation signal may be 125 KHz, 13.56 MHz, 915 MHz, 2.45 GHz, 5.8 GHz, or the like. In some embodiments, activator 112 may be a low-frequency activator. In some embodiments, activator 112 may be a handheld activator, or a fixed activator. In some embodiments, activator 112 may include one or more metal plates, one or more antennas, or one or more magnets (not shown). The metal plate may be configured to conduct electric and produce an electric field. The magnet may be configured to produce a magnetic field. An activation signal may be generated based on the electric field and the magnetic field. The antenna may be configured to transmit or receive a signal (e.g., the activation signal, or the like).

In some embodiments, activator 112 may be located over the tire. For example, as illustrated in FIG. 7, activator A 112-1 may be located over a center of tire A 710, activator B 112-2 may be located over a center of tire B 720. As another example, activator A 112-1 may be located on a position of a fender of tire A 710, activator B 112-2 may be located on a position of a fender of tire B 720. In some embodiments, activator 112 may activate a specific sensor in a tire (i.e., the sensor(s) in other tire(s) may not be activated by the activator). As illustrated in FIG. 7, activator A 112-1 may activate sensor A 114-1 in tire A 710, and activator B 112-2 may activate sensor B 114-2 in tire B 720. The tire position of sensor A 114-1 may be determined based on the activation information (e.g., activator code, tire position of activator, or the like) generated by activator A 112-1, and the tire position of sensor B 114-2 may be determined based on the activation information generated activator B 112-2.

In some embodiments, activator 112 may activate multiple sensors located on or in different tires. The tire positions of the multiple sensors may be determined based on activation information generated by activator 112. In some embodiments, activator 112 may be placed among the different tires. For example, activator 112 may be located over any tire. Distances between the multiple sensors and activator 112 may be different. Activator 112 may generate an activation signal and transmit the activation signal to the multiple sensors. The multiple sensors may receive the activation signal (also referred to as "received activation signal"). Due to the different distances between the multiple sensors and activator 112, strengths of the received activation signals received by the multiple sensors may be different. The tire positions of the multiple sensors may be determined based on the strengths of the received activation signals.

For example, sensor A 114-1 and sensor B 114-2 may be activated by activator 112. Activator 112 may be located between sensor A 114-1 and sensor B 114-2. The strengths of the received activation signals received by sensor A 114-1 and sensor B 114-2 may be different. The tire positons of sensor A 114-1 and sensor B 114-2 may be determined based on the strengths of the received activation signals. In some embodiments, the activation range of activator 112 may be determined based on the distance between the two sensors in two tires (e.g., the distance between sensor A 114-1 and sensor B 114-2), and the distance between activator 112 and sensor 114 that are located in the same tire position (e.g., the distance between activator A 112-1 and sensor A 114-1). For example, if the frequency of the activation signal generated by activator A 112-1 is 125 KHz, the distance between sensor A 114-1 and sensor B 114-2 is 40 centimeters, and the distance between activator A 112-1 and sensor A 114-1 is 20 centimeters, in order to activate sensor A 114-1 only, the diameter of the activation range of activator A 112-1 may be equal to or larger than 20 centimeters, and equal to or less than 40 centimeters. In some embodiments, in order to activate both sensor A 114-1 and sensor B 114-2, the diameter of the activation range of the activator may be set as equal to or larger than 50 centimeters, and equal to or less than 80 centimeters.

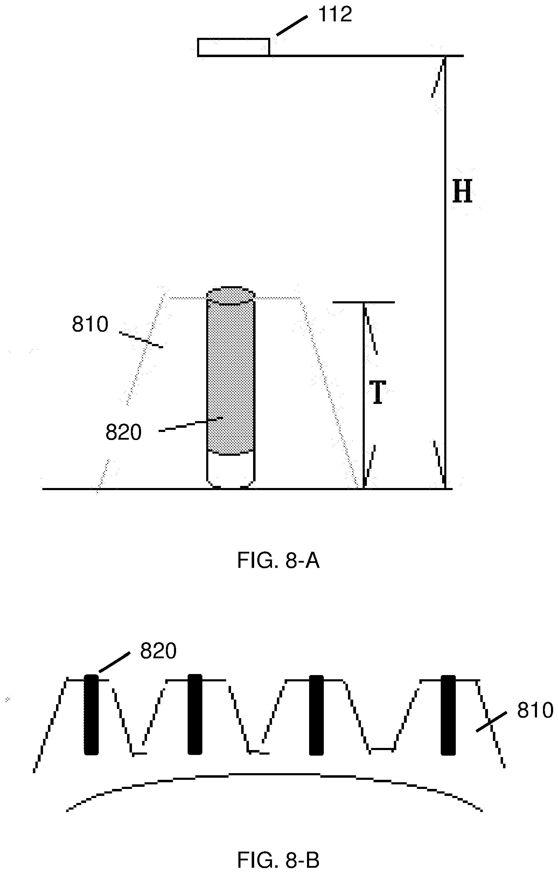

FIG. 8-A is a schematic diagram illustrating an exemplary tread sensor according to some embodiments of the present disclosure. As illustrated, 112 refers to an activator, 810 refers to a tire tread, 820 refers to a tread sensor, T refers to height of tread sensor 820, and H refers to the height between activator 112 and the bottom of tread sensor 820. In some embodiments, the height of tread sensor 820 may be equal to the thickness of tire tread 810. In some embodiments, the shape of tread sensor 820 may be a cylinder. For example, the diameter of tread sensor 820 may be less than 4 millimeters, the height of tread sensor 820 may be 24 millimeters, the height between activator 112 and the bottom of tread sensor 820 may be in a range of 15 to 30 centimeters. In some embodiments, tread sensor 820 may be inserted into tire tread 810 vertically to detect the tread information. In some embodiments, activator 112 may be located over tread sensor 820 to activate tread sensor 820.

FIG. 8-B is a schematic diagram illustrating exemplary locations of the tread sensor(s) in a tire according to some embodiments of the present disclosure. As illustrated, tread sensor 820 may be inserted into tire tread 810 vertically. In some embodiments, there may be one or more tread sensors 820 in a tire. For example, as illustrated in FIG. 8-B, there may be 4 tread sensors 820 in a tire.

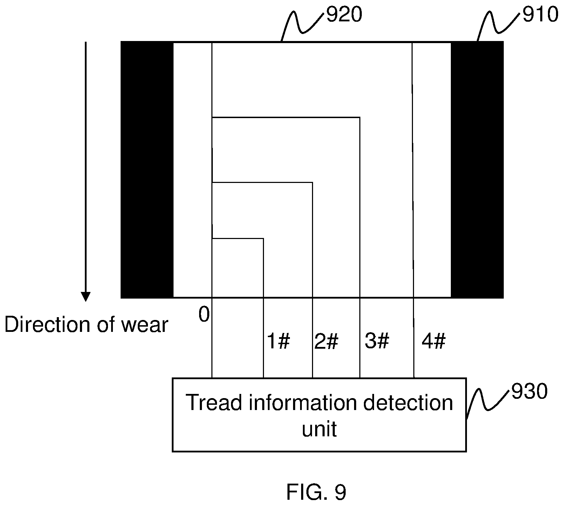

FIG. 9 is a schematic diagram illustrating an exemplary structure of a tread sensor according to some embodiments of the present disclosure. The tread sensor (e.g., tread sensor 820 or part thereof) may include a group of closed circuits 920 and a tread information detection unit 930. As illustrated, 910 refers to a tire tread. The tread sensor may include 4 closed circuits including 1#, 2#, 3#, and 4# in a group of closed circuits 920. The group of closed circuits 920 may be located in tire tread 910 and arranged along a wear direction of tire tread 910. When tire tread 910 is worn, closed circuits 920 may be worn successively along the wear direction of the tread 910. Tread information determination unit 930 may determine wear and rear information of the group of closed circuits 920, and determine the tread information of tire tread 910. In some embodiments, closed circuits may be equally spaced. Alternatively, closed circuits may be spaced unequally. For example, as illustrated in FIG. 9, there are 4 closed circuits in group of closed circuits 920 and the 4 closed circuits are equally spaced. When the 4# closed circuit is worn, the wear rate of the tire tread may be 0-25%. When the 3# closed circuit is worn, the wear rate of the tire tread may be 25-50%. When the 2# closed circuit is worn, the wear rate of the tire tread may be 50-75%. When the 1# closed circuit is worn, the wear rate of the tire tread may be 75-100%. In some embodiment, the more closed circuits there may be, the higher the accuracy of tread information determination may be. In some embodiments, tread information determination unit 930 may be integrated into the group of closed circuits 920. In some embodiments, tread information determination unit 930 may be separated from the group of closed circuits 920. In some embodiments, tread information determination unit 930 may be optional, and the information detected by the group of closed circuits 920 may be transmitted to computing device 300 to determine the tread information. In some embodiments, tread sensor 820 may also be used to detect a wear rate of a solid object (e.g., a component of a machine, or the like).

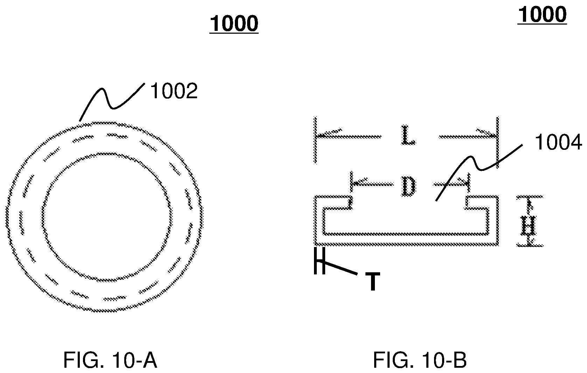

FIG. 10-A is a top view of an exemplary fixing device according to some embodiments of the present disclosure. FIG. 10-B is a sectional view of the fixing device according to some embodiments of the present disclosure. In some embodiments, fixing device 1000 may be configured to fix sensor 114 (e.g., a tire pressure sensor, or the like) to a tire. In some embodiments, fixing device 1000 may include a chamber 1002 with an opening 1004 on the top configured to hold sensor 114. Sensor 114 may be put into fixing device 1000 via opening 1004. In some embodiments, the shape of fixing device 1000 may vary (e.g., cylinder, cuboid, or the like). As illustrated in FIG. 10-A and FIG. 10-B, L refers to an external diameter of fixing device 1000, D refers to a diameter of opening 1004, H refers to a height of fixing device 1000, and T refers to a thickness of fixing device 1000. For example, L may be in a range of 10-100 millimeters, H may be in a range of 3-20 millimeters, D may be in a range of 5-80 millimeters, T may be in a range of 1-5 millimeters. In some embodiments, fixing device 1000 may be made of rubber, and may have a good agglutinating value with the interior of the tire.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

A computer readable signal medium may include a propagated data signal with computer readable program code embodied therein, for example, in baseband or as part of a carrier wave. Such a propagated signal may take any of a variety of forms, including electro-magnetic, optical, or the like, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable signal medium may be transmitted using any appropriate medium, including wireless, wireline, optical fiber cable, RF, or the like, or any suitable combination of the foregoing.

Computer program code for carrying out operations for aspects of the present disclosure may be written in any combination of one or more programming languages, including an object oriented programming language such as Java, Scala, Smalltalk, Eiffel, JADE, Emerald, C++, C#, VB. NET, Python or the like, conventional procedural programming languages, such as the "C" programming language, Visual Basic, Fortran 2003, Perl, COBOL 2002, PHP, ABAP, dynamic programming languages such as Python, Ruby and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS).

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications that are within the scope of the disclosed embodiments. For example, although the implementation of various components described above may be embodied in a hardware device, it may also be implemented as a software only solution-e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various inventive embodiments. This method of disclosure, however, is not to be interpreted as reflecting an intention that the claimed subject matter requires more features than are expressly recited in each claim. Rather, inventive embodiments lie in less than all features of a single foregoing disclosed embodiment.

In closing, it is to be understood that the embodiments of the application disclosed herein are illustrative of the principles of the embodiments of the application. Other modifications that may be employed may be within the scope of the application. Thus, by way of example, but not of limitation, alternative configurations of the embodiments of the application may be utilized in accordance with the teachings herein. Accordingly, embodiments of the present application are not limited to that precisely as shown and described.

## Claims

1. A system (100) for tire management in a vehicle comprising:
an activator (112) configured to generate an activation signal, the activator (112) located over a center of a tire (710) of the vehicle;
a sensor (114-1) installed on or in the tire (710) and configured to:
receive the activation signal from the activator (112); and
generate tire information relating to the tire (710) based on the activation signal; and
a processor (302) configured to:
receive the tire information from the sensor (114-1), and
generate an event based on the tire information, wherein the activator (112) is configured to activate the sensor (114-1) on or in the tire (710) without activating a sensor (114-2) on or in another tire (720) of the vehicle.

2. The system of claim 1, wherein the tire information includes at least one of tire brand, tire type, tire model, tire position, tire pressure, tire temperature, tread information, tire code, production date of the tire, distance that the tire has travelled, vehicle type, license plate number, or sensor code of the sensor.

3. The system of claim 2, wherein the event includes a report indicating at least one of the tire pressure, the tire temperature, or the tread information.

4. The system of any one of claims 1-3, wherein the processor is further configured to:
receive activation information from the activator, the activation information including at least one of an activator code, a strength of the activation signal, or a tire position of the activator; and
determine sensor information based on the activation information, the sensor information including a tire position of the sensor.

5. The system of any one of claims 1-4, wherein the sensor is located in a crown of the tire.

6. The system of any one of claims 1-5, wherein the sensor includes at least one of a radio frequency identification (RFID), a tire pressure sensor, or a tread sensor.

7. The system of claim 6, wherein the tire pressure sensor includes:
one or more antennas configured to receive or transmit signals, a circuit board configured to control the tire pressure sensor, a sensor body configured to hold the one or more antennas and the circuit board, and a body hole on the sensor body, the one or more antennas extending from an interior of the sensor body to an exterior of the sensor body through the body hole.

8. The system of claim 7, wherein a shape of the antenna is straight, spiral, polygonal, or circular.

9. The system of claim 7, wherein there is a gap between the body hole and the antenna.

10. The system of claim 8, wherein the sensor is fixed to the tire by using a fixing device, the fixing device including a chamber with an opening, the sensor being put into or taken out of the fixing device via the opening.

11. The system of claim 6, wherein the tread sensor includes one or more closed circuits located in a tire tread and arranged along a wear direction of the tire tread.

12. A method for tire management in a vehicle comprising:
receiving tire information relating to a tire of the vehicle from a sensor installed on or in the tire, the tire information is generated by the sensor based on an activation signal from an activator, the activator being located over a center of the tire and activating the sensor on or in the tire without activating a sensor on or in another tire of the vehicle; and
generating an event based on the tire information.

## Patentansprüche

1. System (100) für das Reifenmanagement in einem Fahrzeug, das Folgendes umfasst:
einen Aktivator (112), der konfiguriert ist, um ein Aktivierungssignal zu erzeugen, wobei der Aktivator (112) über einer Mitte eines Reifens (710) des Fahrzeugs liegt;
einen Sensor (114-1), der auf oder in dem Reifen (710) installiert und konfiguriert ist, um:
das Aktivierungssignal von dem Aktivator (112) zu empfangen; und
eine Reifeninformation in Zusammenhang mit dem Reifen (710) basierend auf dem Aktivierungssignal zu erzeugen; und
einen Prozessor (302), der konfiguriert ist, um:
die Reifeninformation von dem Sensor (114-1) zu empfangen, und
ein Ereignis basierend auf der Reifeninformation zu erzeugen, wobei der Aktivator (112) konfiguriert ist, um den Sensor (114-1) auf oder in dem Reifen (710) ohne Aktivieren eines Sensors (114-2) auf oder in einem anderen Reifen (720) des Fahrzeugs zu erzeugen.

2. System nach Anspruch 1, wobei die Reifeninformation mindestens eine einer Reifenmarke, eines Reifentyps, eines Reifenmodells, einer Reifenposition, eines Reifendrucks, einer Reifentemperatur, einer Profilinformation, eines Reifencodes, eines Produktionsdatums des Reifens, einer Entfernung, die der Reifen zurückgelegt hat, eines Fahrzeugtyps, eines Kennzeichens oder eines Sensorcodes des Sensors beinhaltet.

3. System nach Anspruch 2, wobei das Ereignis einen Bericht beinhaltet, der mindestens einen des Reifendrucks, der Reifentemperatur oder der Profilinformation beinhaltet.

4. System nach einem der Ansprüche 1 bis 3, wobei der Prozessor weiter konfiguriert ist, um:
eine Aktivierungsinformation von dem Aktivator zu empfangen, wobei die Aktivierungsinformation mindestens einen eines Aktivatorcodes, einer Stärke des Aktivierungssignals oder einer Reifenposition des Aktivators beinhaltet; und
Sensorinformation basierend auf der Aktivierungsinformation zu bestimmen, wobei die Sensorinformation eine Reifenposition des Sensors beinhaltet.

5. System nach einem der Ansprüche 1 bis 4, wobei der Sensor in einer Oberseite des Reifens liegt.

6. System nach einem der Ansprüche 1 bis 5, wobei der Sensor mindestens eine einer Funkfrequenzidentifikation (RFID), eines Reifendrucksensors oder eines Profilsensors beinhaltet.

7. System nach Anspruch 6, wobei der Reifendrucksensor Folgendes beinhaltet:
eine oder mehrere Antennen, die konfiguriert sind, um Signale zu empfangen oder zu übertragen, eine Leiterplatte, die konfiguriert ist, um den Reifendrucksensor zu steuern, einen Sensorkörper, der konfiguriert ist, um die eine oder die mehreren Antennen und die Leiterplatte zu halten, und ein Körperloch auf dem Sensorkörper, wobei sich die eine oder die mehreren Antennen von einem Inneren des Sensorkörpers zu einem Äußeren des Sensorkörpers durch das Körperloch erstrecken.

8. System nach Anspruch 7, wobei eine Form der Antenne gerade, spiralförmig, vieleckig oder kreisförmig ist.

9. System nach Anspruch 7, wobei zwischen dem Körperloch und der Antenne eine Lücke besteht.

10. System nach Anspruch 8, wobei der Sensor an dem Reifen durch Verwenden einer Befestigungsvorrichtung befestigt ist, wobei die Befestigungsvorrichtung eine Kammer mit einer Öffnung beinhaltet, wobei der Sensor in die Befestigungsvorrichtung über die Öffnung eingefügt oder herausgenommen wird.

11. System nach Anspruch 6, wobei der Profilsensor einen oder mehrere unterbrechungsfreie Schaltkreise beinhaltet, die sich in einem Reifenprofil befinden und entlang einer Abnutzungsrichtung des Reifenprofils eingerichtet sind.

12. Verfahren für Reifenmanagement in einem Fahrzeug, das Folgendes umfasst:
Empfangen von Reifeninformation in Zusammenhang mit einem Reifen des Fahrzeugs von einem Sensor, der auf oder in dem Reifen installiert ist, wobei die Reifeninformation von dem Sensor basierend auf einem Aktivierungssignal von einem Aktivator erzeugt wird, wobei der Aktivator über einer Mitte des Reifens liegt und den Sensor auf oder in dem Reifen aktiviert, ohne einen Sensor auf oder in einem anderen Reifen des Fahrzeugs zu aktivieren; und
Erzeugen eines Ereignisses basierend auf der Reifeninformation.

## Revendications

1. Système (100) pour une gestion de pneus dans un véhicule comprenant :
un activateur (112) configuré pour générer un signal d'activation, l'activateur (112) situé au-dessus d'un centre d'un pneu (710) du véhicule ;
un capteur (114-1) installé sur ou dans le pneu (710) et configuré pour :
recevoir le signal d'activation de la part de l'activateur (112) ; et
générer des informations de pneu relatives au pneu (710) sur la base du signal d'activation ; et
un processeur (302) configuré pour :
recevoir les informations de pneu de la part du capteur (114-1), et
générer un événement sur la base des informations de pneu, dans lequel l'activateur (112) est configuré pour activer le capteur (114-1) sur ou dans le pneu (710) sans activer un capteur (114-2) sur ou dans un autre pneu (720) du véhicule.

2. Système selon la revendication 1, dans lequel les informations de pneu incluent au moins l'un d'une marque de pneu, un type de pneu, un modèle de pneu, une position de pneu, une pression de pneu, une température de pneu, des informations de bande de roulement, un code de pneu, une date de production du pneu, une distance que le pneu a parcourue, un type de véhicule, un numéro de plaque d'immatriculation, ou un code de capteur du capteur.

3. Système selon la revendication 2, dans lequel l'événement inclut un rapport indiquant au moins l'un de la pression de pneu, la température de pneu, ou les informations de bande de roulement.

4. Système selon l'une quelconque des revendications 1-3, dans lequel le processeur est configuré en outre pour :
recevoir des informations d'activation de la part de l'activateur, les informations d'activation incluant au moins l'un d'un code d'activateur, une force du signal d'activation, ou une position de pneu de l'activateur ; et
déterminer des informations de capteur sur la base des informations d'activation, les informations de capteur incluant une position de pneu du capteur.

5. Système selon l'une quelconque des revendications 1-4, dans lequel le capteur est situé dans un sommet du pneu.

6. Système selon l'une quelconque des revendications 1-5, dans lequel le capteur inclut au moins l'un d'une identification par radiofréquence (RFID), un capteur de pression de pneu, ou un capteur de bande de roulement.

7. Système selon la revendication 6, dans lequel le capteur de pression de pneu inclut :
une ou plusieurs antennes configurées pour recevoir ou transmettre des signaux, une carte de circuit imprimé configurée pour commander le capteur de pression de pneu, un corps de capteur configuré pour maintenir l'une ou plusieurs antennes et la carte de circuit imprimé, et un orifice de corps sur le corps de capteur, l'une ou plusieurs antennes s'étendant depuis un intérieur du corps de capteur jusqu'à un extérieur du corps de capteur à travers l'orifice de corps.

8. Système selon la revendication 7, dans lequel une forme de l'antenne est droite, en spirale, polygonale, ou circulaire.

9. Système selon la revendication 7, dans lequel il y a un espace entre l'orifice de corps et l'antenne.

10. Système selon la revendication 8, dans lequel le capteur est fixé au pneu en utilisant un dispositif de fixation, le dispositif de fixation incluant une chambre avec une ouverture, le capteur étant introduit dans ou retiré du dispositif de fixation via l'ouverture.

11. Système selon la revendication 6, dans lequel le capteur de bande de roulement inclut un ou plusieurs circuits fermés situés dans une bande de roulement de pneu et disposés le long d'une direction d'usure de la bande de roulement.

12. Procédé pour une gestion de pneus dans un véhicule comprenant :
une réception d'informations de pneu relatives à un pneu du véhicule de la part d'un capteur installé sur ou dans le pneu, les informations de pneu sont générées par le capteur sur la base d'un signal d'activation issu d'un activateur, l'activateur étant situé au-dessus d'un centre du pneu et activant le capteur sur ou dans le pneu sans activer un capteur sur ou dans un autre pneu du véhicule ; et
une génération d'un événement sur la base des informations de pneu.
